# EUROPÄISCHE PATENTSCHRIFT

(11) **EP 1 628 010 B1**
(45) Veröffentlichungstag und Bekanntmachung des Hinweises auf die Patenterteilung: **19.03.2008**
(21) Anmeldenummer: 05103716.6
(22) Anmeldetag: 03.05.2005
(51) Int. Cl.: F02D 41/20, H01L 41/04

(54) **Verfahren und Schaltungsanordnung zum Betrieb eines Piezoaktors**
Method and circuit arrangement for driving a piezoelectric actuator
Méthode et circuit de commande d'un actionneur piezoélectrique

(30) Priorität: 18.08.2004 DE 102004040073
(43) Veröffentlichungstag der Anmeldung: 22.02.2006
(73) Patentinhaber: SIEMENS AKTIENGESELLSCHAFT, 80333 München (DE)
(72) Erfinder: Marzahn, Gabriel, 93138 Lappersdorf (DE)

(56) Entgegenhaltungen:
- EP-A- 0 379 182
- EP-A- 1 418 328
- WO-A-00/45046
- DE-A1- 10 120 143
- DE-A1- 19 733 560

## Beschreibung

Die vorliegende Erfindung betrifft ein Verfahren zum Betrieb eines Piezoaktors nach dem Oberbegriff des Anspruchs 1, insbesondere zum Betrieb eines Piezoaktors zur Betätigung eines Kraftstoffeinspritzventils einer Brennkraftmaschine. Ferner betrifft die vorliegende Erfindung eine Schaltungsanordnung zur Durchführung eines solchen Verfahrens.

Insbesondere die in letzter Zeit strenger gewordenen Abgasnormen für Motoren haben in der Kraftfahrzeugindustrie die Entwicklung von Kraftstoffinjektoren mit schnell und verzögerungsfrei ansprechenden Stellgliedern bzw. Aktoren ausgelöst. Bei der praktischen Realisierung derartiger Stellglieder haben sich insbesondere piezoelektrische Elemente als vorteilhaft erwiesen. Derartige Piezoelemente sind üblicherweise als ein Stapel von Piezokeramikscheiben zusammengesetzt, die über eine elektrische Parallelschaltung betrieben werden, um die für einen ausreichenden Hub notwendigen elektrischen Feldstärken erreichen zu können.

Verfahren nach dem Oberbegriff des Anspruchs 1 sind beispielsweise aus der DE 197 33 560 A1 und der DE 101 20 143 A1 bekannt. Die darin beschriebenen Schaltungsanordnungen dienen zum Betreiben einer Injektoranordnung mit einem oder mehreren Injektoren, die jeweils aus einem elektrisch ansteuerbaren Piezoaktor und einem mittels des Piezoaktors betätigbaren Kraftstoffventil gebildet sind, wobei wahlweise jedem der Injektoren eine Ansteuerspannung zum Ansteuern des Piezoaktors über ein Leitungspaar zugeführt wird.

Die Verwendung von piezoelektrischer Keramik zur Betätigung von Kraftstoffeinspritzventilen einer Brennkraftmaschine stellt erhebliche Anforderungen an die Elektronik zum Aufladen und Entladen der Piezokeramik. Es müssen dabei vergleichsweise große Spannungen (typisch 100V oder mehr) und kurzzeitig vergleichsweise große Ströme zur Ladung und Entladung (typisch mehr als 10A) bereitgestellt werden. Zur Optimierung der Motoreigenschaften (z.B. Abgaswerte, Leistung, Verbrauch etc.) sollten diese Lade- und Entladevorgänge in Bruchteilen von Millisekunden mit gleichzeitig weitgehender Kontrolle über Strom und Spannung erfolgen. Die Eigenheit der Piezokeramik als nahezu rein kapazitive Last mit nur vergleichsweise geringer umgesetzter Wirkleistung, aber andererseits hoher Blindleistung erfordert mehr oder weniger aufwändige Schaltungskonzepte für die Elektronik zur Ansteuerung der Piezoelemente.

Zum Laden und Entladen von Piezoaktoren werden häufig getaktete Endstufen benutzt, die zwecks Verbesserung des Schaltungswirkungsgrades die beim Entladen gewonnene elektrische Energie aus dem Piezoaktor in die Versorgung zurückspeisen. Dabei besteht allerdings das Problem, dass, je weiter der Entladevorgang fortgeschritten ist, die dann bereits abgesunkene Piezospannung ab einem gewissen Zeitpunkt nicht mehr ausreicht, die Ladung zurück in die Endstufe zu treiben. Selbst wenn die beiden Piezoanschlüsse ab einem gewissen Zeitpunkt über eine Entladepassage bzw. einen strombegrenzten Pfad (z. B. einen Widerstand) kurzgeschlossen werden, so entsteht hierbei eine Unstetigkeit in Form eines Knicks im Piezospannungsverlauf um den Zeitpunkt des Einschaltens eines Entladeschalters herum. Diese Unstetigkeit im Spannungsverlauf bzw. die dementsprechende sprunghafte Änderung im Stromverlauf kann unter Umständen die Funktion des vom Piezoaktor betätigten Injektors stören.

Es ist daher eine Aufgabe der vorliegenden Erfindung, den Betrieb eines Piezoaktors dahingehend zu verbessern, dass eine rasche Entladung ohne störende Entladeunstetigkeiten ermöglicht wird.

Diese Aufgabe wird gelöst durch ein Verfahren nach Anspruch 1 bzw. eine Schaltungsanordnung nach Anspruch 9.

Bei dem erfindungsgemäßen Verfahren ist vorgesehen, dass zu einem bestimmten Zeitpunkt während des Entladens des Piezoaktors eine zweite Entladepassage zwischen dem zweiten Piezoanschluss und einem Potenzial bereitgestellt (aktiviert) wird, welches zwischen den beiden Ansteuerpotenzialen liegt. Ein derartiges "Zwischenpotenzial" lässt sich schaltungstechnisch vergleichsweise einfach z. B. aus der Ansteuerspannung erzeugen.

Beispielsweise kann zur Bereitstellung der zweiten Entladepassage während des Entladens ein Schalter ("zweiter Entladeschalter") geschlossen werden, um den zweiten Piezoanschluss über einen strombegrenzten Entladepfad mit dem zwischen den beiden Ansteuerpotenzialen liegenden Potenzial zu verbinden.

Die Grundidee der Erfindung beruht auf folgender Erkenntnis: Die Entladung eines Piezoaktors ausgehend von einem Ladezustand, in welchem an dem ersten Piezoanschluss ein erstes Ansteuerpotenzial und an dem zweiten Piezoanschluss ein zweites Ansteuerpotenzial anliegt, lässt sich ohne Verursachung von störenden Entladeunstetigkeiten dadurch beschleunigen, dass beim Entladen nicht nur mittels der ersten Entladepassage das am ersten Piezoanschluss ("high side") herrschende Potenzial in Richtung des zweiten Ansteuerpotenzials ("Masse") verändert wird, sondern auch eine zweite Entladepassage zwischen dem zweiten Piezoanschluss und einem Potenzial geschaffen wird, welches zwischen den beiden Ansteuerpotenzialen liegt. Durch eine geeignete Wahl der zeitlichen Abfolge bei der Bereitstellung dieser beiden Entladepassagen sowie derer elektrischer Eigenschaften lassen sich Entladeunstetigkeiten praktisch vollkommen vermeiden. Der Entladevorgang verläuft dann rasch und trotzdem sehr gleichmäßig.

Bevorzugt wird die zweite Entladepassage (z. B. durch Schließen eines zweiten Entladeschalters) zu einem Zeitpunkt während des Entladens bereitgestellt, zu welchem die Spannung zwischen den beiden Piezoanschlüssen noch mindestens 30% der entsprechenden Spannung im Ladezustand des Piezoaktors beträgt. Diese Maßnahme gewährleistet, dass der zusätzlich geschaffene zweite Entladungspfad im Rahmen des Gesamtentladevorganges noch nennenswert zur Verringerung Zeitspanne wirken kann, die zur Entladung des Piezoaktors insgesamt benötigt wird.

Ferner ist es vorteilhaft, wenn das zwischen den beiden Ansteuerpotenzialen liegende Potenzial, mit welchem der zweite Piezoanschluss über die zweite Entladepassage verbunden wird, einen Wert von maximal 50% des ersten Ansteuerpotenzials im Ladezustand des Piezoaktors besitzt. Es hat sich herausgestellt, dass ein in diesem Bereich gewähltes Zwischenpotenzial zur möglichst vollständigen Beseitigung von Entladeunstetigkeiten zweckmäßig ist.

Außerdem besitzt diese Dimensionierung des Zwischenpotenzials noch einen weiteren Vorteil zur Ausbildung einer spezielleren Ausführungsform im Zusammenhang mit den elektrischen Eigenschaften der hier in Rede stehenden Piezoaktoren. Wenn nämlich die den zweiten Piezoanschluss mit dem Zwischenpotenzial verbindende zweite Entladepassage über den Entladezustand des Piezoaktors (Spannung zwischen den Piezoanschlüssen = 0) hinaus aufrecht erhalten wird, so ergibt sich am Ende des Entladevorganges eine Umpolung der Piezospannung. Diese Umpolung ist notwendig zur Realisierung einer Ausführungsform, bei welcher der genutzte Hub des Piezoaktors dadurch vergrößert ist, dass die Ansteuerspannung betriebsmäßig über einen Ansteuerspannungsbereich variiert wird, dessen Grenzen eine entgegengesetzte Polarität besitzen. Anders ausgedrückt wird die Piezokeramik beim Übergang von einem Extrem-Ansteuerzustand zu dem anderen Extrem-Ansteuerzustand nicht lediglich ausgehend von einem spannungslosen Zustand verlängert (oder verkürzt). Vielmehr durchläuft die Piezokeramik beim Übergang zwischen den Extremzuständen den spannungslosen Zustand.

Eine solche Vergrößerung des nutzbaren Hubs beim Betrieb eines Piezoaktors zur Betätigung eines Kraftstoffeinspritzventils an sich ist z. B. aus der DE 102 50 917 B3 bekannt. In dieser Veröffentlichung wird auch dargelegt, dass es auf Grund der physikalischen Eigenschaften typisch verwendeter Piezokeramiken von Vorteil ist, wenn die Vorspannung (entspechend dem oben erwähnten Zwischenpotenzial) betragsmäßig kleiner ist als die Maximalansteuerspannung. So wird in dieser Veröffentlichung ein Ausführungsbeispiel beschrieben, bei welchem der Piezoaktor mit einer Maximalansteuerspannung von +160V und einer betragsmäßig wesentlich kleineren Vorspannung von -30V betrieben wird. Bei dieser Wahl des Ansteuerspannungsbereiches ergibt sich der Vorteil, dass die Polarisationsvorzugsorientierung der Piezokeramik im Betrieb nicht umgekehrt wird (so dass "Hystereseprobleme" vermieden werden).

In einer bevorzugten Ausführungsform wird die zweite Entladepassage frühestens zu einem Zeitpunkt wieder deaktiviert (z. B. der zweite Entladeschalter wieder geöffnet), zu welchem die zwischen den beiden Piezoanschlüssen anliegende Spannung bereits weniger als 5% der entsprechenden Spannung im Ladezustand des Piezoaktors beträgt. Durch diese Wahl des Zeitpunkts wird gewährleistet, dass die zweite Entladepassage hinreichend lange wirkt, um den Entladevorgang merklich zu beschleunigen. Insbesondere wenn am Ende des Entladevorganges ein spannungsloser Zustand (Piezospannung = 0) erreicht werden soll, so ist es bevorzugt, die zweite Entladepassage etwa zu einem Zeitpunkt wieder zu deaktivieren, zu welchem die Piezospannung annähernd Null ist. Falls dagegen mit der Entladung eine wie oben erwähnte Umpolung der Piezospannung erreicht werden soll, so ist es vorteilhaft, wenn die zweite Entladepassage erst dann wieder deaktiviert wird, wenn die Piezospannung bereits negativ ist. Die zweite Entladepassage besitzt dann eine Doppelfunktion, nämlich einerseits zur Beschleunigung bzw. Modifizierung des Entladevorganges und andererseits zur Umpolung der Piezospannung (Hubvergrößerung).

In einer weiteren Ausführungsform ist vorgesehen, dass wenigstens eine weitere erste Entladepassage zwischen dem ersten Piezoanschluss und dem zweiten Ansteuerpotenzial während des Entladens und nach Bereitstellung der ersten Entladepassage oder nach dem Entladen bereitgestellt wird. Prinzipiell kann mit einer oder mehreren solchen weiteren ersten Entladepassagen die Entladung weiter beschleunigt werden. In der Praxis ist jedoch insbesondere die Anordnung mehrerer solcher zusätzlicher erster Entladepassagen bzw. Entladeschalter aus Kostengründen zumeist nicht sinnvoll.

Der Aufwand zur Bereitstellung eines weiteren solchen Entladeschalters mit einer zusätzlichen ersten Entladepassage ist jedoch in der Praxis durchaus vertretbar, da ein solcher zusätzlicher Entladeschalter zur Erhöhung der Betriebssicherheit dienen kann. Insbesondere wenn durch eine Schaltungsanordnung zum Betrieb mehrerer Piezoaktoren zu einem bestimmten Zeitpunkt gerade einer der Piezoaktoren entladen wurde und zuverlässig in einem spannungslosen Zustand gehalten werden soll, kann dies durch Schließen eines solchen zusätzlichen Entladeschalters ("Sicherheitsschalter") in einfacher Weise gewährleistet werden. Wenn ein solcher Sicherheitsschalter bereits vor dem Ende des Entladevorganges geschlossen wird, so kann damit die Entladung noch etwas beschleunigt werden.

Insbesondere wenn ein solcher weiterer erster Entladeschalter die erwähnte Sicherheitsfunktion besitzen soll, so sollte die damit bereitgestellte weitere Entladepassage eine hohe Strombelastbarkeit bzw. einen vergleichsweise kleinen elektrischen Widerstand besitzen ("Sicherheitskurzschluss"). Dadurch besteht jedoch beim Schließen dieses Schalters die Gefahr, dass eine Entladeunstetigkeit hervorgerufen wird. Um diese Entladeunstetigkeit bzw. deren Auswirkungen auf die Funktion des Gesamtsystems möglichst gering zu halten, ist es gemäß einer Ausführungsform bevorzugt, wenn die weitere erste Entladepassage frühestens zu einem Zeitpunkt bereitgestellt wird bzw. der weitere erste Entladeschalter frühestens zu einem Zeitpunkt geschlossen wird, zu welchem die Piezospannung bereits weniger als 30% der entsprechenden Spannung im Ladezustand des Piezoaktors beträgt.

Eine Schaltungsanordnung zur Durchführung des erfindungsgemäßen Betriebsverfahrens kann beispielsweise folgende Einrichtungen aufweisen:
- eine Spannungsquelle zur Bereitstellung einer Spannung, um daraus ein erstes Ansteuerpotenzial und ein zweites Ansteuerpotenzial zu erzeugen, deren Differenz eine (maximale) Ansteuerspannung darstellt, die an den Piezoaktor anzulegen ist, um diesen in einen (Maximal-)Ladezustand zu versetzen,
- eine erste Schalteinheit, die in Abhängigkeit von einem ersten Steuersignal den ersten Piezoanschluss entweder (zum Laden) mit dem ersten Ansteuerpotenzial oder (zum Entladen) mit dem zweiten Ansteuerpotenzial beaufschlagt,
- eine zweite Schalteinheit, die in Abhängigkeit von einem zweiten Steuersignal den zweiten Piezoanschluss (während des Ladens) mit dem zweiten Ansteuerpotenzial oder (während des Entladens) mit einem Potenzial beaufschlagt, welches zwischen den beiden Ansteuerpotenzialen liegt, und
- eine Steuereinheit zur Bereitstellung der genannten Steuersignale (z. B. in einem Motorsteuergerät implementiert).

Die Erfindung wird nachfolgend anhand von Ausführungsbeispielen mit Bezug auf die beigefügten Zeichnungen näher beschrieben. Es stellen dar:
- Fig. 1: ein schematisches Blockschaltbild einer Schaltungsanordnung zum Betrieb einer Mehrzahl von Piezoaktoren,
- Fig. 2: ein Prinzipschaltbild zur Erläuterung der Wirkung von ersten Entladepassagen bei der Entladung eines Piezoaktors,
- Fig. 3: eine Darstellung des zeitlichen Verlaufs der Piezospannung bei einer Entladung mittels der Entladepassagen gemäß Fig. 2,
- Fig. 4: ein Prinzipschaltbild zur Erläuterung der Wirkung von ersten Entladepassagen und einer zusätzlichen zweiten Entladepassage bei der Entladung eines Piezoaktors,
- Fig. 5: eine Darstellung des zeitlichen Verlaufs der Piezospannung bei einer Entladung mittels der Entladepassagen gemäß Fig. 4,
- Fig. 6: eine Darstellung zur Veranschaulichung der zeitlichen Verhältnisse bei der Bereitstellung verschiedener Entladepassagen während des Entladevorganges,
- Fig. 7: eine der Fig. 5 ähnliche Zeitverlaufsdarstellung, die sich bei modifizierter Betriebsweise des in Fig. 4 dargestellten Schaltungsteils ergibt, und
- Fig. 8: eine zusammenfassende Darstellung verschiedener Zeitverläufe bei der Entladung eines Piezoaktors, die sich für verschiedene Betriebsweisen des in Fig. 4 dargestellten Schaltungsteils ergeben.

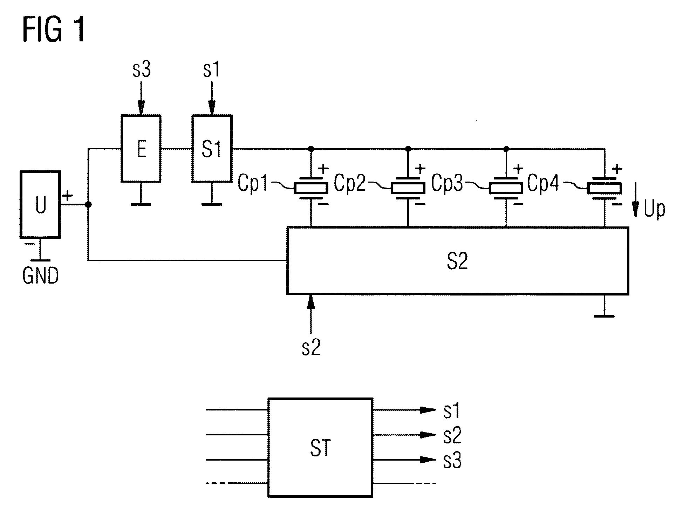

Fig. 1 ist ein Blockschaltbild einer Schaltungsanordnung zur Ansteuerung von vier Piezoaktoren Cp1, Cp2, Cp3 und Cp4. Ein einzelner oder sämtliche dieser Piezoaktoren werden nachfolgend auch kurz mit Cp bezeichnet. Die Piezoaktoren Cp sind über einen ersten Piezoanschluss Cp+ (positiver Pol) elektrisch miteinander und mit einer ersten Schalteinheit S1 elektrisch verbunden. Mit einem zweiten Piezoanschluss Cpsind die Piezoaktoren Cp mit einer zweiten Schalteinheit S2 verbunden.

Die Piezoaktoren Cp dienen zur Betätigung jeweiliger (nicht dargestellter) Kraftstoffeinspritzventile einer Brennkraftmaschine eines Kraftfahrzeugs. Das zum Betrieb der Piezaktoranordnung erforderliche Laden und Entladen der Piezoaktoren Cp erfolgt durch Bereitstellung (Aktivierung) und Deaktivierung von Lade- und Entladepassagen über die beiden Schalteinheiten S1 und S2.

Die Schalteinheit S1 beaufschlagt die ersten Piezoanschlüsse in gesteuerter oder geregelter Weise mit einem ersten Piezopotenzial und ist über eine Endstufe E mit einer Spannungsquelle U elektrisch verbunden. Auch die zweite Schalteinheit S2 ist mit der Spannungsquelle U verbunden und dient zur Beaufschlagung der zweiten Piezoanschlüsse mit einem zweiten Piezopotenzial.

Die Differenz der an einem Piezoaktor Cp anliegenden Ansteuerpotenziale wird nachfolgend auch als Piezospannung Up bezeichnet.

Im Betrieb der Schaltungsanordnung werden die beiden Schalteinheiten S1, S2 sowie die Endstufe E von einer Steuereinheit ST gesteuert, welche zu diesem Zweck Steuersignale s1, s2 und s3 an die Schalteinheiten S1, S2 und die Endstufe E ausgibt.

In an sich bekannter Weise kann das Steuersignal s2 beispielsweise die Schalteinheit S2 dazu veranlassen, den zweiten Piezoanschluss Cp- eines bestimmten (nachfolgend aufzuladenden) Piezoaktors Cp mit der elektrischen Fahrzeugmasse GND (zweites Ansteuerpotenzial) zu verbinden. Dieser Vorgang wird üblicherweise als "Auswahl" bezeichnet und durch Schließen eines zwischen dem betreffenden Piezoanschluss Cp- und Masse GND angeordneten Auswahlschalters bewerkstelligt. Das Laden des somit ausgewählten Piezoaktors Cp kann dann durch (kontinuierliche oder getaktete) Ansteuerung der Endstufe E und der ersten Schalteinheit S1 mittels der Steuersignale s3 und s1 derart erfolgen, dass durch die Endstufe E ein vorbestimmtes Ladepotenzial bzw. ein vorbestimmter Ladepotenzialverlauf zur Weitergabe über die erste Schalteinheit S1 an den ersten Piezoanschluss Cp+ erzeugt wird. Damit wird der ausgewählte Piezoaktor Cp in einen Ladezustand gebracht, in welchem die Piezospannung Up beispielsweise der von der Spannungsquelle U bereitgestellten Spannung entsprechen kann. Dies ist jedoch keineswegs zwingend. Je nach Ausbildung der Endstufe kann die für den Ladezustand vorgesehene Piezospannung davon abweichen.

An dieser Stelle ist anzumerken, dass die in Fig. 1 sowie den nachfolgenden Figuren gezeigten Schaltungen - zum einfacheren Verständnis der Erfindung - stark vereinfacht dargestellt sind und in Wirklichkeit komplexer aufgebaut sind.

Das durch die Endstufe E bereitgestellte Ladepotenzial bzw. der vorbestimmte Ladepotenzialverlauf wird z. B. bei getakteten Endstufen üblicherweise über ein Ausgangsfilter (in E und/oder S1 impementiert) an den ersten Piezoanschluss Cp+ weitergegeben. Das Ausgangsfilter umfasst hierbei z. B. einen Kondensator (z. B. 1µF) zwischen "high side" und Masse GND und nachfolgend (zum Piezoaktor Cp hin) eine Induktivität in Reihe (z. B. 10µH). Auf diese an sich bekannte Weise entsteht ein Tiefpass zweiter Ordnung, der den Sägezahn-förmigen Strom glättet. Dieser Ausgangsfilter verzögert meist das Entladen und vergrößert die störende Entladeunstetigkeit.

Bei einer "Umschwing"- oder "LC"-Endstufe geschieht das Laden des Piezoaktors Cp hingegen durch Umschwingen einer Ladung von einem Umschwingkondensator (z. B. 10µF) über eine Umschwingspule (z. B. 900µH) in den Piezo hinein.

In ebenfalls an sich bekannter Weise kann ein Entladen des Piezoaktors Cp ausgehend vom Ladezustand dadurch erfolgen, dass mittels oder in der ersten Schalteinheit S1 eine erste Entladepassage bereitgestellt wird, welche den ersten Piezoanschluss Cp+ (kontinuierlich oder getaktet; üblicherweise über eine strombegrenzende Spule) mit der Masse GND verbindet.

Bei einer Umschwingendstufe geschieht das Entladen des Piezoaktors Cp z. B. durch Umschwingen einer Ladung von dem erwähnten Umschwingkondensator über die erwähnte Umschwingspule von dem Piezo zurück in Richtung zur Endstufe.

Auf Grund einer in der Praxis begrenzten Strombelastbarkeit dieser Entladepassage benötigt der Entladevorgang eine gewisse Zeit. Um die Entladung zu beschleunigen, kommt es in Betracht, ab einem gewissen Zeitpunkt während des Entladens eine weitere erste Entladepassage bereitzustellen.

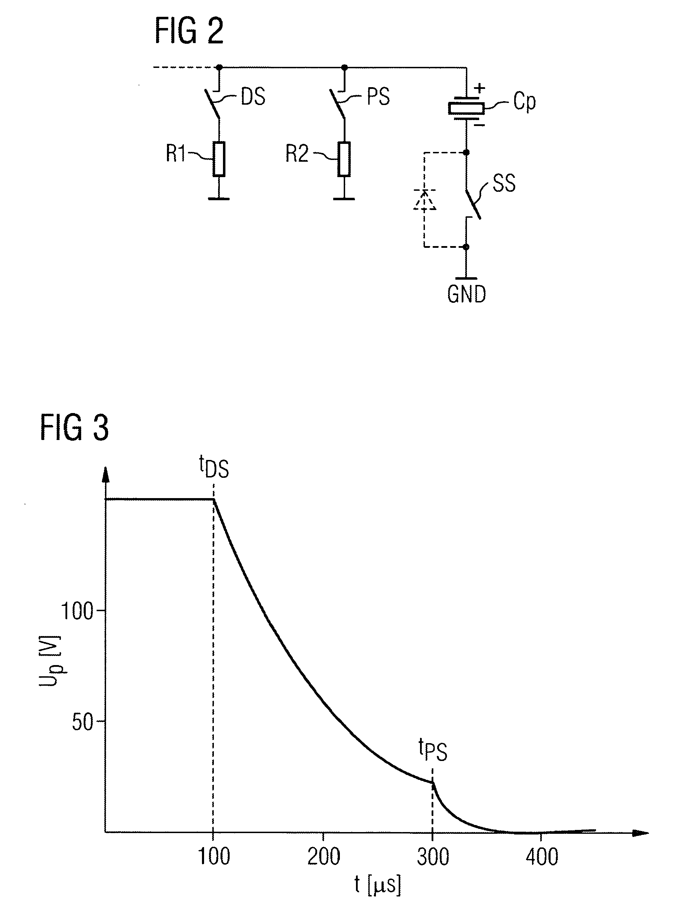

Der bis hierher beschriebene Entladevorgang sei anhand der Fig. 2 und 3 weiter erläutert.

In Fig. 2 erkennt man einen in der Schalteinheit S2 enthaltenen Auswahlschalter SS sowie zwei erste Entladeschalter DS und PS, die jeweils in der ersten Schalteinheit S1 oder der Endstufe E enthalten sind und zur Bereitstellung von ersten Entladepassagen (hier vereinfacht durch Widerstände R1 und R2 symbolisiert) dienen. Bei einer Umschwingendstufe wären üblicherweise Umschwingkondensator und Umschwingspule zwischen den Schaltern DS und PS angeordnet.

Der Schalter SS repräsentiert einen der für jeden der Piezoaktoren Cp verwendeten Auswahlschalter, mittels derer man die Endstufe E für mehrere Aktoren verwenden kann. Die gestrichelt eingezeichnete Diode parallel zu diesem Schalter repräsentiert die Substratdiode dieses als Leistungsfeldeffekttransistor ausgebildeten Schalters.

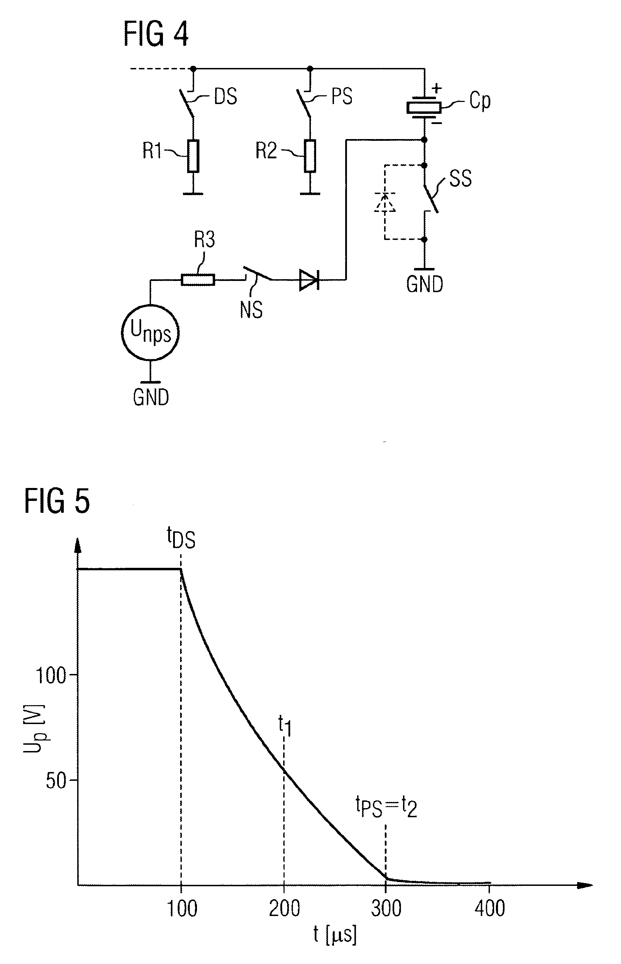

Eine Entladung über einen rein ohmschen Widerstand, wie hier vereinfachend als R1 gezeichnet, ist in der Realität bereits aufgrund der hohen Verlustleistung und des schlechten Wirkungsgrades ungünstig. Die hier näher betrachtete Entladung über R1 soll nur die Entladung über einen realen Treiber nachbilden. In Wirklichkeit geschieht das Laden, wie oben bereits erwähnt, z. B. über periodenweises Beaufschlagen einer Spule eines Trafos ("Flyback-Prinzip") oder durch Umschwingen von Ladung (LC-Treiber). Dementsprechend ist der in den Fig. 3 und 5 dargestellte zeitliche Verlauf der Piezospannung Up auch nur ein mehr oder weniger grobes Modell des tatsächlichen Verlaufs (der z. B. bei einer Taktung feine Stufen aufweisen kann) .

Ausgehend von einem Ladezustand des Piezoaktors Cp, bei welchem der Auswahlschalter SS üblicherweise (aber aufgrund der Substratdiode nicht zwingend) geschlossen ist, wird zum Entladen des Piezoaktors Cp zunächst der Entladeschalter DS geschlossen, um den ersten Piezoanschluss Cp+ über den Widerstand R1 mit der Masse GND zu verbinden.

Fig. 3 zeigt den zeitlichen Verlauf der (vereinfacht modellierten) Piezospannung Up. Daraus ist ersichtlich, dass beginnend mit dem Schließen des Entladeschalters DS zu einem bestimmten Zeitpunkt (hier: t_{DS}=100 µs) eine Abnahme der Piezospannung Up erfolgt.

Wenn während des Entladens zu einem späteren Zeitpunkt (hier: t_{PS}=300 µs) zusätzlich der weitere Entladeschalter PS geschlossen wird, so wird die Entladung ab diesem Zeitpunkt beschleunigt. Es entsteht jedoch ein Knick im Piezospannungsverlauf, der gleichbedeutend mit einer sprunghaften Vergrößerung des über die Entladepassagen geführten Gesamt-Entladestroms ist. Eine solche Unstetigkeit im Piezospannungsverlauf kann sich in der Praxis unter Umständen nachteilig auf die Funktion der Kraftstoffinjektoren auswirken.

Diese Entladeunstetigkeit lässt sich jedoch durch eine Abwandlung der Funktion der zweiten Schalteinheit S2 beseitigen. Dies wird nachfolgend anhand der Fig. 4 und 5 veranschaulicht.

Die Fig. 4 und 5 sind den Fig. 2 und 3 ähnliche Darstellungen der für die Entladung wesentlichen Schaltungsteile (Fig. 4) und des bei der Entladung resultierenden (vereinfacht modellierten) Piezospannungsverlaufs (Fig. 5).

Wie bei der vorangehend beschriebenen Entladung werden wieder zu einem Zeitpunkt t_{DS}=100 µs ein Entladeschalter DS und zu einem Zeitpunkt t_{PS}=300 µs ein weiterer Entladeschalter PS geschlossen (vgl. Fig. 5). Das Schließen des weiteren Entladeschalters PS führt jedoch zu keiner nachteiligen Entladeunstetigkeit, weil zu dem entsprechenden Zeitpunkt t_{PS} (hier: 300 µs) die Piezospannung bereits nahezu Null ist. Dies wird dadurch bewerkstelligt, dass zu einem bestimmten Zeitpunkt t₁ während des Entladens ein in der Schalteinheit S2 enthaltener zweiter Entladeschalter NS (vgl. Fig. 5)geschlossen wird, um den zweiten Piezoanschluss Cp- über eine zweite Entladepassage (in Fig. 5 durch einen Widerstand R3 symbolisiert) mit einem Potenzial Uₙₚₛ zu verbinden, welches von der zweiten Schalteinheit S2 erzeugt wird und zwischen den beiden Ansteuerpotenzialen U und GND liegt, welche dieser Schalteinheit zugeführt werden. Damit wird erreicht, dass die abnehmende Piezospannung Up ab dem Zeitpunkt t₁ nahezu stetig in einen weiteren Spannungsverlauf übergeht, dessen Steigung sich bis zur vollständigen Entladung des Piezoaktors Cp relativ wenig abflacht, so dass zu einem Zeitpunkt von t=300 µs der Piezoaktor Cp bereits nahezu vollständig entladen ist. Bei dem dargestellten Ausführungsbeispiel werden genau zu diesem Zeitpunkt sowohl der weitere erste Entladeschalter PS geschlossen (t_{PS}) als auch der zweite Entladeschalter NS wieder geöffnet (t₂).

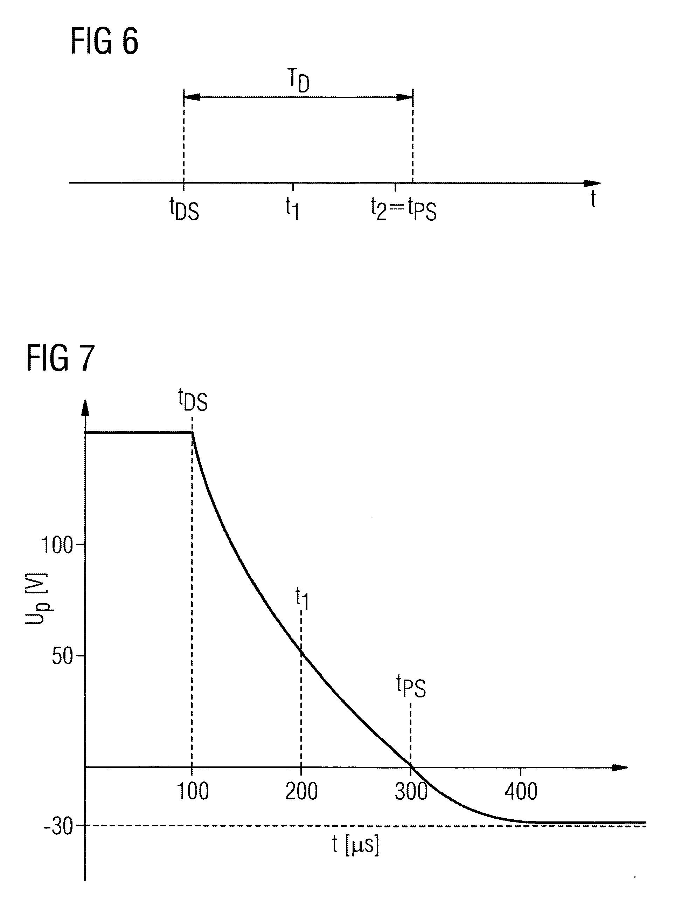

Die in Fig. 4 zwischen NS und SS bzw. Cp- ersichtliche Diode lässt bei geschlossenem NS Strom von Uₙₚₛ hin zum Piezoaktor Cp fließen, verhindert aber umgekehrt einen Rückfluss in Uₙₚₛ hinein. Diese (Entkoppel-)Diode muss für jeden Piezoaktor einer so genannten "Bank" einzeln vorhanden sein und entkoppelt die verschiedenen Aktoren einer Bank. Genau wie eine Endstufe (High-Side-Treiber) mehrere, über die Auswahlschalter SS ausgewählte Injektoren treiben kann, kann ein Schaltungsmodul zur Bereitstellung des Zwischenpotenzials Uₙₚₛ mehrere Injektoren, über diese Dioden entkoppelt, beaufschlagen bzw. verpolen (vgl. Fig. 7). Hierzu kann eine Verzweigung von dem einen Schaltungsmodul zu einer Mehrzahl von Aktoren zwischen einem einmal vorhandenen Schalter NS und einer entsprechenden Mehrzahl von Dioden vorgesehen sein.

Im Ergebnis wird der Entladevorgang somit im Vergleich zu der Betriebsweise nach Fig. 3 und 4 beschleunigt ohne eine wesentliche Entladeunstetigkeit hervorzurufen.

Gleichzeitig mit dem Schließen des zweiten Entladeschalters NS muss der Auswahlschalter SS geöffnet werden. Dies stört jedoch den Entladevorgang nicht, da der Entladestrom ab diesem Zeitpunkt von der zweiten Entladepassage NS, R3, Uₙₚₛ übernommen wird. In diesem Zusammenhang ist anzumerken, dass ab diesem Zeitpunkt der Entladestrom auch teilweise über eine dem Schalter SS parallel angeordnete Diode (in Fig. 2 und 4 gestrichelt eingezeichnet) fließen kann. Diese Diode kann eigens hierfür angeordnet werden und/oder - wie oben bereits erwähnt - durch entsprechende Gestaltung des Auswahlschalters SS (Substratdiode eines FET) realisiert werden.

Fig. 6 veranschaulicht nochmals die zeitliche Abfolge der Aktivierungs-/Deaktivierungs- bzw. Schaltzeitpunkte während eines Entladevorganges, der insgesamt eine Zeitdauer T_{D} benötigt. Die Entladung des Piezoaktors Cp beginnt mit dem Schließen des ersten Entladeschalters DS zu einem Zeitpunkt t_{DS}. Sodann wird während dieser Entladephase zu einem Zeitpunkt t₁= 200 µs der zweite Entladeschalter NS geschlossen. Erst wenn die Piezospannung Up auf nahezu Null abgesunken ist, wird der zweite Entladeschalter NS wieder geöffnet und der weitere erste Entladeschalter PS geschlossen. Der Schalter PS kann aus Sicherheitsgründen so lange geschlossen bleiben, bis der betreffende Piezoaktor Cp (oder ein anderer Piezoaktor derselben Bank) zu einem späteren Zeitpunkt wieder für ein Laden ausgewählt wird.

Abweichend von diesem Ausführungsbeispiel ist es durch Hinzuschalten der zweiten Entladepassage während des Entladevorganges möglich, auf den weiteren ersten Entladeschalter PS zu verzichten. Dieser zusätzliche Schalter PS kann somit zur Verringerung der Kosten der Schaltungsanordnung ganz eingespart werden.

Bei der anhand der Fig. 4 und 5 beschriebenen Ausführungsform wird der zweite Entladeschalter NS zu einem Zeitpunkt t₂ wieder geöffnet, zu welchem die Piezospannung Up annähernd Null ist. Eine Modifikation des Betriebsverfahrens, bei welcher der zweite Entladeschalter NS über den spannungslosen Zustand mit Up=0 hinaus geschlossen bleibt, wird nachfolgend anhand von Fig. 7 erläutert.

Fig. 7 zeigt den zeitlichen Verlauf der Piezospannung Up für den Fall, dass die Schaltzeitpunkte t_{DS}, t₁ und t_{PS} wieder bei t=100 µs, 200 µs und 300 µs gewählt sind, der zweite Entladeschalter NS jedoch nicht um den Zeitpunkt t_{PS} herum wieder geöffnet wird, sondern über diesen Zeitpunkt hinaus geschlossen bleibt und erst unmittelbar vor der Auswahl eines Piezoaktors Cp der gleichen Bank für einen erneuten Ladevorgang wieder geöffnet wird. Im Ergebnis werden Unstetigkeiten beim Entladevorgang wieder vermieden. Außerdem kommt es etwa bei t=300 µs zu einer Umpolung der Piezospannung Up, bei welcher der zweite Piezoanschluss Cp- mit einem zweiten Ansteuerpotenzial (hier: +30V) beaufschlagt wird, welches positiv gegenüber dem bereits weit (auf etwa GND=0V) abgesunkenen ersten Ansteuerpotenzials ist. Damit wird der Entladevorgang über den spannungslosen Zustand Up=0 hinaus etwas verlängert (bis etwa t=400 µs), wobei jedoch der eingangs bereits erläuterte Vorteil einer Hubvergrößerung des angesteuerten Piezoaktors Cp erreicht wird.

Nach dem Entladen von Cp ins Negative und vor dem Aufladen des nächsten Aktors der gleichen Bank wird der Schalter NS zweckmäßigerweise (aber je nach Auslegung der mit R3 bezeichneten Passage nicht zwingend) geöffnet. Durch den betreffenden leitenden Auswahlschalter SS würde Uₙₚₛ durch einen Kurzschluss belastet. Alle Aktoren verlieren ihre negative Spannung nur sehr langsam, da kein Entladepfad zu Verfügung steht, außer z. B. ein in den Piezoaktoren üblicherweise integrierter Parallelshunt (z. B. 200kOhm). Der als nächstes zu ladende Piezoaktor wird dann ausgewählt und damit schlagartig auf 0V entladen, da der Entladeschalter PS zu diesem Zeitpunkt noch leitend ist. Dann wird der Schalter PS geöffnet und der Piezoaktor auf z.B. 150V geladen. Die anderen, nicht selektierten Piezoaktoren dieser Bank machen diesen Spannungshub sowohl an ihrem Plus- (Cp+) als auch an ihrem Minuspol (Cp-) mit, wobei Cp- potenzialmäßig um Uₙₚₛ höher liegt als Cp+. Damit die zu diesem Zeitpunkt potenzialmäßig hoch liegenden Minuspole der nicht selektierten Piezoaktoren Cp über den gemeinsamen zur Uₙₚₛ-Spannungsquelle führenden Anschluss nicht durch den selektierten Aktorminuspol Cp- auf 0V kurzgeschlossen werden, ist die Anordung solcher Entkopplungsdioden zweckmäßig.

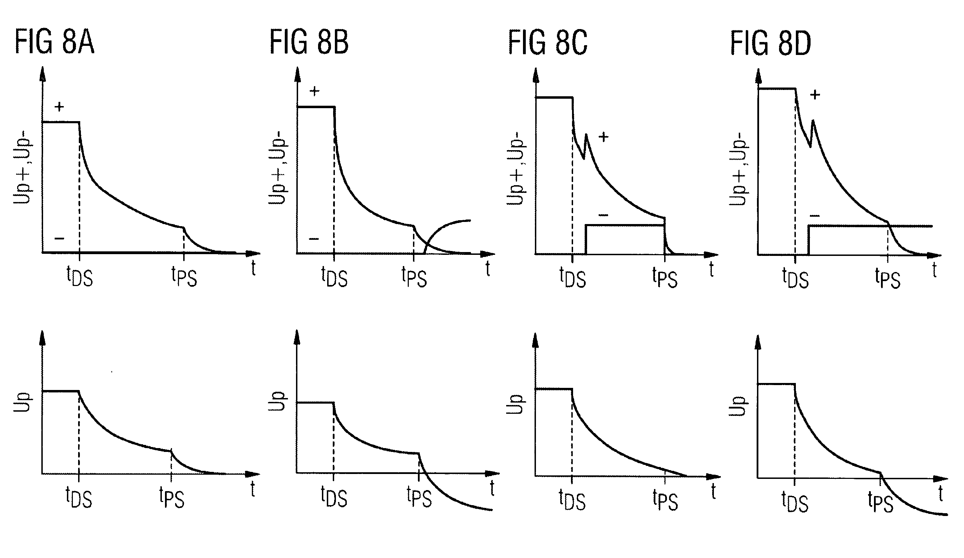

Fig. 8 ist eine zusammenfassende Darstellung der zeitlichen Verläufe der beiden Piezopotenziale Up+ und Up- (Fig. 8 oben) sowie der daraus resultierenden Piezospannung Up = Up+ - Up- (Fig. 8 unten). Diese zeitlichen Verläufe sind für verschiedene Entlade-Betriebsverfahren der Schaltungsanordnung nach Fig. 1 dargestellt, die in Fig. 8 mit a, b, c, und d bezeichnet sind.

Im Fall a wird das zweite Piezopotenzial Up- durchgehend auf Masse GND gehalten (geschlossener Auswahlschalter SS). Das erste Piezopotenzial Up+ wird demgegenüber durch aufeinanderfolgendes Schließen der Entladeschalter DS und PS verringert. Es resultieren zwei Unstetigkeiten im Piezospannungsverlauf Up. Dieser Fall entspricht der Darstellung von Fig. 3.

Im Fall b wird abweichend vom Fall a nach dem Schließen des weiteren Entladeschalters PS auch noch der zweite Entladeschalter NS geschlossen (und der Auswahlschalter SS geöffnet), um den zweiten Piezoanschluss auf ein gegenüber dem ersten Piezoanschluss Cp+ positives Potenzial zu bringen. Wie aus dem Verlauf der Piezospannung Up ersichtlich, ergibt sich ein größerer Bereich der Piezospannungsvariation und damit einhergehend ein größerer nutzbarer Hub des Piezoaktors. Nachteilig verbleiben jedoch die zwei Entladeunstetigkeiten im Piezospannungsverlauf Up.

Solche nachteiligen Entladeunstetigkeiten sind in den Fällen c und d vermieden.

Im Fall c wird vergleichsweise frühzeitig während des Entladens, nämlich kurz nach dem Schließen des ersten Entladeschalters DS bereits der zweite Entladeschalter NS geschlossen. Erst nachdem die Piezospannung Up nahezu den Wert Null erreicht hat, wird auch der weitere erste Entladeschalter PS geschlossen und der zweite Entladeschalter NS wieder geöffnet. Dieser Fall entspricht der Darstellung nach Fig. 5.

Im Fall d wird abweichend zum Fall c zwar bei einer Piezospannung Up von annähernd Null der weitere erste Entladeschalter PS geschlossen, der zweite Entladeschalter NS jedoch über diesen Zeitpunkt hinaus geschlossen gehalten. Es kommt ebenfalls zu einer Vermeidung von wesentlichen Entladeunstetigkeiten bei gleichzeitiger Hubvergrößerung. Dieser Fall entspricht der Darstellung von Fig. 7.

Zusammenfassend wird in den Fällen c und d der Piezo-Entladevorgang bis zum spannungslosen Zustand Up=0 durch Anheben des zweiten Piezopotenzials Cp- beschleunigt. Bei den bisher bekannten Entladeverfahren wurde demgegenüber das zweite Piezopotenzial ("low side") auf Masse (GND bzw. 0V) gehalten.

Wie bei den bisherigen Entladeverfahren wird das Potenzial des ersten Piezoanschlusses Cp+ ("high side") ausgehend von einer Haltespannung im Ladezustand während des Entladens verkleinert, sei es durch eine getaktete oder kontinuierliche Energieentnahme.

## Patentansprüche

1. Verfahren zum Betrieb eines Piezoaktors, insbesondere eines Piezoaktors zur Betätigung eines Kraftstoffeinspritzventils einer Brennkraftmaschine,
wobei der Piezoaktor (Cp) zum Laden und Entladen des Piezoaktors (Cp) einen ersten Piezoanschluss (Cp+) und einen zweiten Piezoanschluss (Cp-) aufweist,
wobei ausgehend von einem Ladezustand des Piezoaktors (Cp), in welchem an dem ersten Piezoanschluss (Cp+) ein erstes Ansteuerpotenzial (U) und an dem zweiten Piezoanschluss (Cp-) ein zweites Ansteuerpotenzial (GND) anliegt, zum Entladen des Piezoaktors (Cp) wenigstens eine erste Entladepassage (R1) zwischen dem ersten Piezoanschluss (Cp+) und dem zweiten Ansteuerpotenzial (GND) bereitgestellt wird,
**dadurch gekennzeichnet, dass** zu einem bestimmten Zeitpunkt (t₁) während des Entladens des Piezoaktors (Cp) eine zweite Entladepassage (R3) zwischen dem zweiten Piezoanschluss (Cp-) und einem Potenzial (Uₙₚₛ) bereitgestellt wird, welches zwischen den beiden Ansteuerpotenzialen (U, GND) liegt.

2. Verfahren nach Anspruch 1, wobei die zweite Entladepassage (R3) zu einem Zeitpunkt (t₁) während des Entladens bereitgestellt wird, zu welchem die Spannung (Up) zwischen den beiden Piezoanschlüssen (Cp+, Cp-) noch mindestens 30% der entsprechenden Spannung (U) im Ladezustand des Piezoaktors (Cp) beträgt.

3. Verfahren nach Anspruch 1 oder 2, wobei das zwischen den beiden Ansteuerpotenzialen (U, GND) liegende Potenzial (Uₙₚₛ) einen Wert von maximal 50% des ersten Ansteuerpotenzials (U) im Ladezustand des Piezoaktors (Cp) besitzt.

4. Verfahren nach Anspruch 1, 2 oder 3, wobei die zweite Entladepassage (R3) frühestens zu einem Zeitpunkt (t₂) wieder deaktiviert wird, zu welchem die zwischen den beiden Piezoanschlüssen (Cp+, Cp-) anliegende Spannung (Up) bereits weniger als 5% der entsprechenden Spannung (U) im Ladezustand des Piezoaktors (Cp) beträgt.

5. Verfahren nach Anspruch 4, wobei die zweite Entladepassage (R3) zu einem Zeitpunkt (t₂) wieder deaktiviert wird, zu welchem die zwischen den beiden Piezoanschlüssen (Cp+, Cp-) anliegende Spannung (Up) annähernd Null ist.

6. Verfahren nach Anspruch 4, wobei die zweite Entladepassage (R3) erst zu einem Zeitpunkt (t₂) wieder deaktiviert wird, zu welchem die zwischen den beiden Piezoanschlüssen (Cp+, Cp-) anliegende Spannung (Up) bereits negativ ist.

7. Verfahren nach einem der vorangehenden Ansprüche, wobei nach der Bereitstellung der ersten Entladepassage (R1), während des Entladens oder nach dem Entladen, wenigstens eine weitere erste Entladepassage (R2) zwischen dem ersten Piezoanschluss (Cp+) und dem zweiten Ansteuerpotenzial (GND) bereitgestellt wird.

8. Verfahren nach Anspruch 7, wobei die weitere erste Entladepassage (R2) frühestens zu einem Zeitpunkt (t_{PS}) bereitgestellt.wird, zu welchem die zwischen den beiden Piezoanschlüssen (Cp+, Cp-) anliegende Spannung (Up) bereits weniger als 30% der entsprechenden Spannung (U) im Ladezustand des Piezoaktors (Cp) beträgt.

9. Schaltungsanordnung mit Mitteln (U, ST, E, S1, S2) zur Durchführung eines Verfahrens nach einem der Ansprüche 1 bis 8.

## Claims

1. Method for operating a piezoactuator, in particular a piezoactuator for activating a fuel injection valve of an internal combustion engine,
whereby the piezoactuator (Cp) has a first piezoconnection (Cp+) and a second piezoconnection (Cp-) for charging and discharging said piezoactuator (Cp),
whereby, from a charge state of the piezoactuator (Cp), in which a first control potential (U) is present on the first piezoconnection (Cp+) and a second control potential (GND) is present on the second piezoconnection (Cp-), at least one first discharge passage (R1) is provided between the first piezoconnection (Cp+) and the second control potential (GND) for the purpose of discharging the piezoactuator (Cp),
**characterised in that** a second discharge passage (R3) is provided - at a certain instant (t1) during the discharging of the piezoactuator (Cp) - between the second piezoconnection (Cp-) and a potential (Uₙₚₛ) lying between the two control potentials (U, GND).

2. Method according to claim 1, whereby the second discharge passage (R3) is provided at an instant (t1) during the discharge process, at which the voltage (Up) between the two piezoconnections (Cp+, Cp-) is still at least 30% of the corresponding voltage (U) in the charge state of the piezoactuator (Cp).

3. Method according to claim 1 or 2, whereby the potential (Uₙₚₛ) lying between the two control potentials (U, GND) has a maximum value of 50% of the first control potential (U) in the charge state of the piezoactuator (Cp).

4. Method according to claim 1, 2 or 3, whereby the second discharge passage (R3) is deactivated again at the earliest, at an instant (t2) at which the voltage (Up) present between the two piezoconnections (Cp+, Cp-) is already less than 5% of the corresponding voltage (U) in the charge state of the piezoactuator (Cp).

5. Method according to claim 4, whereby the second discharge passage (R3) is deactivated again at an instant (t₂) at which the voltage (Up) present between the two piezoconnections (Cp+, Cp-) is almost zero.

6. Method according to claim 4, whereby the second discharge passage (R3) is only deactivated again at an instant (t₂) at which the voltage (Up) present between the two piezoconnections (Cp+, Cp-) is already negative.

7. Method according to one of the preceding claims, whereby at least one additional first discharge passage (R2) is provided between the first piezoconnection (Cp+) and the second control potential (GND), after the first discharge passage (R1) has been provided, during the discharge process or after the discharge process.

8. Method according to claim 7, whereby the additional first discharge passage (R2) is provided, at the earliest, at an instant (t_{PS}) at which the voltage (Up) present between the two piezoconnections (Cp+, Cp-) is already less than 30% of the corresponding voltage (U) in the charge state of the piezoactuator (Cp).

9. Circuit arrangement with resources (U, ST, E, S1, S2) for implementing a method according to one of claims 1 to 8.

## Revendications

1. Procédé pour actionner un actionneur piézoélectrique, notamment un actionneur piézoélectrique servant à actionner un injecteur de carburant d'un moteur à combustion interne,
l'actionneur piézoélectrique (Cp) présentant un premier raccordement piézoélectrique (Cp+) et un deuxième raccordement piézoélectrique (Cp-) pour la charge et la décharge de l'actionneur piézoélectrique (Cp),
au moins un premier passage de décharge (R1) entre le premier raccordement piézoélectrique (Cp+) et le deuxième potentiel d'excitation (GND) étant préparé pour décharger l'actionneur piézoélectrique (Cp) en partant d'un état de charge de l'actionneur piézoélectrique (Cp) dans lequel un premier potentiel d'excitation (U) se trouve sur le premier raccordement piézoélectrique (Cp+) et dans lequel un deuxième potentiel d'excitation (GND) se trouve sur le deuxième raccordement piézoélectrique (Cp-),
**caractérisé en ce qu'**à un moment (t₁) donné pendant la décharge de l'actionneur piézoélectrique (Cp) un deuxième passage de décharge (R3) est préparé entre le deuxième raccordement piézoélectrique (Cp-) et un potentiel (Uₙₚₛ) est créé entre les deux potentiels d'excitation (U, GND).

2. Procédé selon la revendication 1 dans lequel le deuxième passage de décharge (R3) est préparé pendant la décharge à un moment (t₁) où la tension (Up) entre les deux raccordements piézoélectriques (Cp+, Cp-) correspond encore à au moins 30% de la tension correspondante (U) à l'état de charge de l'actionneur piézoélectrique (Cp).

3. Procédé selon la revendication 1 ou 2 dans lequel le potentiel (Uₙₚₛ) créé entre les deux potentiels d'excitation (U, GND) présente une valeur de 50% maximum du premier potentiel d'excitation (U) à l'état de charge de l'actionneur piézoélectrique (Cp).

4. Procédé selon la revendication 1, 2 ou 3, dans lequel le deuxième passage de décharge (R3) est à nouveau désactivé au plus tôt à un moment où la tension (Up) se trouvant entre les deux raccordements piézoélectriques (Cp+, Cp-) est déjà inférieure à 5% de la tension correspondante (U) à l'état de charge de l'actionneur piézoélectrique (Cp).

5. Procédé selon la revendication 4 dans lequel le deuxième passage de décharge (R3) est à nouveau désactivé à un moment (t₂) où la tension (Up) se trouvant entre les deux raccordements piézoélectriques (Cp+, Cp-) est quasiment nulle.

6. Procédé selon la revendication 4 dans lequel le deuxième passage de décharge (R3) n'est à nouveau désactivé qu'à un moment (t₂) où la tension (Up) se trouvant entre les deux raccordements piézoélectriques (Cp+, Cp-) est déjà négative.

7. Procédé selon l'une quelconque des revendications précédentes dans lequel au moins un autre premier passage de décharge (R2) est préparé entre le premier raccordement piézoélectrique (Cp+) et le deuxième potentiel d'excitation (GND) après la préparation du premier passage de décharge (R1) pendant la décharge ou après la décharge.

8. Procédé selon la revendication 7 dans lequel l'autre premier passage de décharge (R2) est préparé au plus tôt à un moment (t_{PS}) où la tension (Up) se trouvant entre les deux raccordements piézoélectriques (Cp+, Cp-) est déjà inférieure à 30% de la tension correspondante (U) à l'état de charge de l'actionneur piézoélectrique (Cp).

9. Circuit avec des moyens (U, ST, E, S1, S2) pour réaliser un procédé selon l'une quelconque des revendications 1 à 8.
